# EUROPEAN PATENT SPECIFICATION

(11) **EP 0 379 056 B1**
(45) Date of publication and mention of the grant of the patent: **02.11.1994**
(21) Application number: 90100487.9
(22) Date of filing: 11.01.1990
(51) Int. Cl.: H02G 15/18, H02G 15/184

(54) **Element of a device for realizing a joint of electric cables, joint for electric cables obtained thereby, and covering of the connection between the conductors of electric cables for said joint**
Element einer Anordnung zur Herstellung einer Verbindung von elektrischen Kabeln, eine dadurch erhaltene Verbindung von elektrischen Kabeln und Abdeckung der Verbindung zwischen den Leitern der elektrischen Kabel für die oben erwähnte Verbindung
Elément d'un dispositif de réalisation d'une jonction de câbles électriques, jonction de câbles électriques ainsi obtenue, ainse que recouvrement du raccordement entre les conducteurs des câbles électriques pour ladite jonction

(30) Priority: 16.01.1989 IT 1910289
(43) Date of publication of application: 25.07.1990
(73) Proprietor: PIRELLI CAVI S.p.A., 20126 Milano (IT)
(72) Inventor: Vallauri, Ubaldo, Monza (MI) (IT); Parmigiani, Bruno, Milan (IT); Portas, Francesco, Quattordio (AL) (IT)
(74) Representative: Giannesi, Pier Giovanni

(56) References cited:
- EP-A- 0 149 032
- EP-A- 0 393 495
- DE-A- 3 001 158
- GB-A- 2 046 032
- US-A- 3 816 640
- US-A- 4 035 534

## Description

The present invention refers to an element of a device for realizing joints of electric cables and in particular joints of electric cables of the type in which a tubular covering is fitted and elastically tightened on the ends of two cables which face each other and surrounds the connection between the conductors of said cables.

The present invention concerns also the joints of electric cables realized by means of the above said element and a tubular covering for joints which is destined to encircle the connection between the conductors of the cables and to tighten elastically on the ends of these latter which face each other.

The known devices for realizing joints of cables are of the type in which at least a tubular covering, made up of an electrically insulating material for at least a part of its thickness, surrounds the connection between the conductors and is elastically tightened on the ends of the cables which face each other in the joint.

Examples of known devices are described in the European patent No. 149 032 of the same Applicant, in the German patent No. 3 001 158 and in the Japanese patent No. 54-49588.

All the known devices include an element comprising a rigid tubular support on which a tubular covering for joints of cables is fitted in an elastically expanded condition and means for removing the support from the tubular covering in order to enable this latter to shrink elastically to embrace and tighten, always elastically, on the ends of the two cables, which face each other, enclosing the electrical and mechanical connection of the conductors of said cables.

The known devices have drawbacks which are linked to the above indicated known particular element of the devices themselves.

The known elements of the devices for realizing joints have the diameter of the inner cavity of the tubular support only a little greater than that of the outer diameter of the cables where the joints are to be realized.

This to impose an elongation as less as possible in radial direction on the elastically expansible tubular covering in order to avoid that it suffers permanent plastic deformations which would prevent the tubular covering, once it is fitted on the connection between the conductors of the cables, from exerting the required tightening on their ends.

The need of avoiding the arising of permanent plastic deformations in the tubular covering for joints of cables is in fact an essential need since if in a joint between cables the tubular covering enclosing the mechanical and electrical connection between the conductors of the cables has suffered a permanent plastic deformation in radial direction can be no longer able to exert a sufficient compression on the ends of the insulations of the cables embraced by said tubular covering. In these conditions the joint runs the risk of becoming perforated under the action of the electric stresses applied to it during the working.

In fact an insufficient radial pressure exerted by the tubular covering on the ends of the insulations of the cables does not assure a complete absence of air bubbles, also very small bubbles, between the surfaces in contact to each other of said elements and a perfect tightness against possible infiltrations of moisture traces between said surfaces.

The foregoing constitutes a heavy conditioning either for the above mentioned elements of the devices for realizing joints of cables, for the joints of cables, or for the tubular coverings of these latter owing to the need existing at present for providing a plurality of rigid supports of different diametrical dimensions and relative tubular coverings of different diametrical dimensions too (to be fitted on the supports) in order to cover the wide range of diameters of the cables where the joints are to be made. The above represents a drawback since obliges the users to store a considerable number of sleeves and relative supports of different types in order to cover any possible situation.

Always to avoid risks of permanent deformations in the tubular coverings, the fitting of these latter on the tubular supports at present is carried out immediately before effecting the joint.

This because a high elongation in radial direction maintained with the passing of time on a known tubular covering for joints fitted on a tubular support means also the risk of causing in the covering a permanent plastic deformation in radial direction which is as greater as longer the time of application of said high elongation is.

To effect the fitting of a tubular covering on a tubular support immediately before realizing a joint means to carry out said operation in place with all the risks that unavoidably this involves because of the ambient conditions that in yard are of difficult control and an unavoidable increase in the time for effecting the joints; moreover this involves the impossibility of storing the already ready elements of the devices for realizing joints of electric cables.

The aim of the present invention is that of overcoming the above stated limitations of the known technique by providing an element of a device for realizing joints of cables that can be stored also for a time up to two years and able to allow with a sole element the realization of joints of cables chosen in a wide range of diameters and in particular joints chosen in a group of cables where the ratio between the maximum diameter and the minimum diameter reaches 1.6 without originating any drawback in the joints realized thereby.

Also the aim of the present invention is that of providing tubular coverings for joints between cables that make possible the realization of the above said element.

The object of the present invention is an element of a device for realizing joints between electric cables comprising a rigid tubular support and a tubular covering for connections of conductors of electric cables comprising a first and a second sleeve, both sleeves are elastically expansible in radial direction, coaxial and superimposed each upon the other, made up of compounds of a cross-linked polymeric material, fitted in a radially elastically expanded condition on said rigid support, the first sleeve, which is radially inside the second sleeve, being electrically insulating at least for a part of its thickness, characterized by the fact that the cross-linked compound constituting the second sleeve has a residual deformation due to an imposed elongation applied in time smaller than that of the compound constituting the first sleeve.

Another object of the present invention is a joint for electric cables comprising an electric and mechanical connection between the conductors of two cables and a covering for said connection comprising a first and a second sleeve, both sleeves are elastically expansible in radial direction, coaxial and superimposed each upon the other, made up of a cross-linked polymeric material, surrounding said connection and tightened on the end portions of the insulations of the cables in a radially elastically expanded condition, the first sleeve, which is radially inside the second sleeve, being electrically insulating at least for a part of its thickness, characterized by the fact that the cross-linked compound constituting the second sleeve has a residual deformation, due to an imposed elongation applied in time, smaller than that of the compound constituting the first sleeve.

A further object of the present invention is a covering for joints of electric cables comprising a first and a second sleeve, both sleeves are elastically expansible in radial direction, coaxial and superimposed each upon the other, made up of compounds of a cross-linked polymeric material, intended to surround the mechanical and electrical connection between the conductors of the cables and to tighten elastically on the end portions of the cables in radially elastically expanded conditions, the first sleeve, which is radially inside the second sleeve being electrically insulating for at least a part of its thickness, characterized by the fact that the cross-linked compound constituting the second sleeve has a residual deformation due to an imposed elongation applied in time, smaller than that of the compound constituting the first sleeve.

The present invention will be better understood by the following detailed description made by way of non-limiting example with reference to the figures of the attached sheets of drawings in which:
- FIGURE 1 -: is a perspective view of an element according to the invention;
- FIGURE 2 -: is a longitudinal section of the tubular covering for joints of electric cables of the element of figure 1;
- FIGURE 3 -: is a perspective view of an alternative embodiment of an element according to the invention;
- FIGURE 4 -: is a longitudinal section of the tubular covering for joints of electric cables of the element of figure 3;
- FIGURE 5 -: is a longitudinal section of an alternative embodiment according to the invention of a tubular covering for joints of cables;
- FIGURE 6 -: is a longitudinal section of a joint between electric cables obtained by means of the element of figure 3.

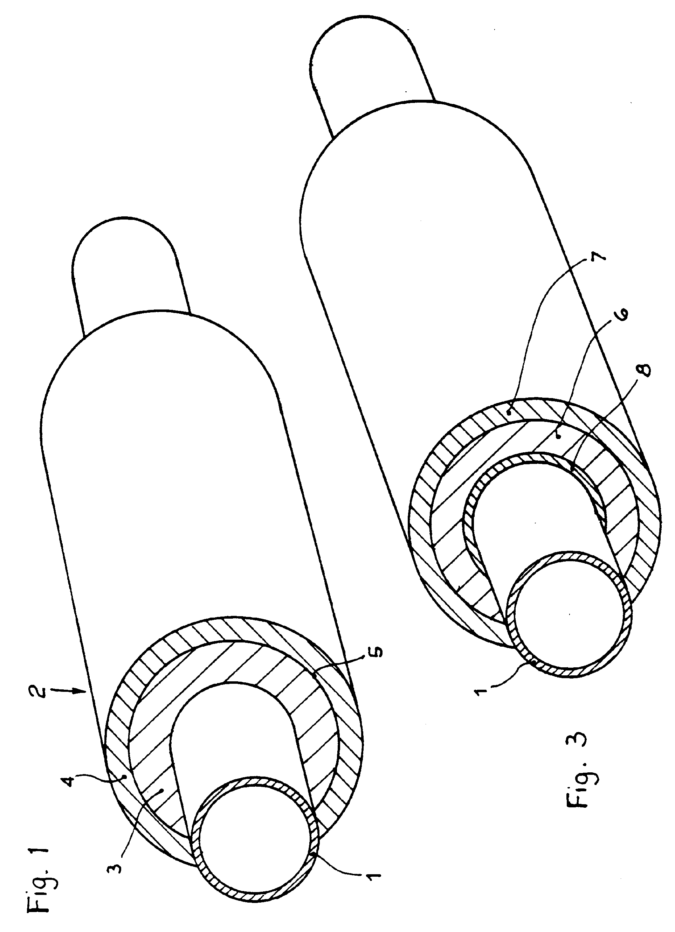

Figure 1 represents in perspective view an element according to the invention of a device for realizing joints of electric cables.

As shown in figure 1 the element has a rigid tubular support 1, for instance a portion of a pipe of rigid PVC, on which a tubular covering 2 for joints of electric cables is fitted in elastically expanded conditions. The tubular covering 2, whose structure will be disclosed hereinafter, has such dimensions as to be able to realize joints in cables of outer diametrical dimensions chosen in a wide range of values, for instance in cables whose outer diameter is comprised between 21 mm and 33 mm.

Consequently, in the absence of elastic expansion the diameter of the inner cylindrical cavity of the tubular covering 2 has such a value as to be suitable for realizing joints also in cables whose outer diametrical dimensions constitute the minimum value of the above given range; for instance in the absence of elastic expansion the diameter is of 17 mm.

Instead the tubular covering 2 has an overall thickness which is suitable for realizing the covering of a joint for cables whose outer diametrical dimensions constitute the maximum value of the above given range, for instance in absence of elastic expansion the overall thickness of the tubular covering 2 is of 15 mm.

Moreover the inner diameter of the tubular support 1 is greater than the outer diameter of the cable whose outer diametrical dimensions constitute the maximum value of the set of cables in which the joints will be carried out by means of the element shown in figure 1.

For instance the rigid tubular support 1 has an inner diameter of 38 mm for the range of cables given above by way of example.

The tubular covering 2 which is fitted in elastically expanded conditions on the rigid tubular support 1 has the following structure. It comprises a first sleeve 3 of a compound of a cross-linked polymeric material elastically deformable in radial direction whose characteristics will be disclosed hereinafter, and a second sleeve 4 coaxial and superimposed upon the first sleeve 3, made up of a compound of a cross-linked polymeric material too, elastically deformable in radial direction and also the characteristics of the second sleeve 4 will be disclosed hereinafter.

The first sleeve 3 and the second sleeve 4 are connected each other in correspondence of the surfaces 5 where they are in mutual contact and said bond is for instance obtained by extruding or cross-linking the two sleeves 3 and 4 together when they are made up of compounds containing base polymers having chemical affinity.

Alternatively, the sleeves 3 and 4 are independent of each other, i.e. they are not mutually connected in correspondence of the surfaces 5 where they are mutually in contact.

In any case, one of the essential characteristics for the purposes of the present invention is that the material constituting the second sleeve 4 has a residual deformation due to an imposed elongation applied in time smaller than that of the material constituting the first sleeve 3.

The first sleeve 3 that as previously said is constituted by a cross-linking polymeric material compound, elastically deformable in radial direction is electrically insulating.

The sleeve 3 has in radial direction a thickness not smaller than that necessary, from an electrical point of view, for carrying out joints in the maximum diameter cables of the set of cables to which it is destined.

Moreover the first sleeve 3 is constituted by a cross-linked compound having a modulus E not lower than 0.05 kg/mm² and a percentage ultimate elongation not lower than 250% to avoid during the fitting of the first sleeve 3 on the tubular support 1 the risks of tearing the same.

Preferably the modulus E of the compound constituting the first sleeve is comprised between 0.05 and 0.5 kg/mm².

An example of compound of cross-linkable polymeric material constituting the first sleeve 3 is that having the following recipe given in parts by weight:
- ethylene-propylene copolymer, for example that known on the market with the name DUTRAL CO-O54 of Dutral S.p.A. 100
- zinc oxide 5
- stearic acid 1
- lead oxide (Pb₃O₄) 5
- calcined kaolin treated superficially with trimetoxyetoxyvinylxylane 70
- triallyl cyanurate 1.5
- paraffinic plasticizer 18
- poly 1.2 dihydro 2.2.4 trimethylquinoline 1.5
- mercaptobenzo imidazol 2
- propylbenzene 1.7
- α,α′ bis terbutylperoxy 1.7

The first sleeve 3 made up of the above given compound and after the cross-linking of the same has the following characteristics:
- ultimate tensile strength 70 kg/mm²
- percentage ultimate tensile elongation 560%
- modulus E 0.15 kg/mm²
- residual deformation due to an imposed elongation of 50% according to the UNI 7321-74 standards on a flat specimen at 100°C and for a time of 500 hours 28%
- dielectric constant ε, according to the ASTM D150 standards 3
- resistivity of volume, according to ASTM D257 10¹⁵Ohm x cm

According to one embodiment, the first sleeve, made up entirely of an insulating material is formed by the assemblage of a plurality of coaxial tubular layers extruded together made up of an insulating material having different mechanical characteristics.

In particular proceeding in radial direction from inside towards outside the layers constituting the first sleeve 3 have an increasing modulus E and a decreasing percentage ultimate elongation.

For instance in case the first sleeve 3 is formed by two tubular layers the radially innermost one has a modulus E of 0.10 kg/mm² and a percentage ultimate elongation of 550% and the radially outermost layer has a modulus E of 0.40 kg/mm² and an ultimate elongation of 280%.

The second sleeve 4, as previously said, is constituted by a compound of a cross-linked polymeric material too, elastically deformable in radial direction and the characteristics of said compound are as follows.

The percentage ultimate tensile elongation of the compound constituting the second sleeve 4 is not lower than 150% to avoid in the same the risk of tearings and the modulus E of the same has a value not lower than twice the value of the modulus E of the compound constituting the first sleeve.

For instance, when the modulus E of the compound constituting the first sleeve is comprised between 0.05 and 0.5 kg/mm² the modulus E of the compound constituting the second sleeve is comprised between 0.1 and 1.5 kg/mm².

Moreover the residual deformation due to an imposed elongation of an entity equal to that necessary for the purposes of the present invention applied for a time not shorter than two years and to a temperature comprised between the ambient temperature and the cable service temperature of the compound constituting the second sleeve must be smaller than that of the compound constituting the first sleeve.

Preferably the compound constituting the second sleeve has a residual deformation due to an imposed elongation of 50% smaller than 15%, determined with the procedure defined by the UNI 7321-74 standards on a flat specimen at 100°C, and applied for a time of 500 hours (a time well longer than the maximum time foreseen by said standards which is of 72 hours).

Moreover the thickness, measured in radial direction of the second sleeve 4 is chosen in such a way that because of the elastic deformation received in consequence of the fitting of the covering on the rigid tubular support, said sleeve can store sufficient energy to oblige the first sleeve 3 not only to follow it during the elastic contraction that takes place during the realization of the joint when the tubular support is removed from the tubular covering, but also to oblige this latter to tighten sufficiently on the ends of the cables in the jointing zone.

Preferably the thickness of the second sleeve 4 is not smaller than 20% the thickness of the first sleeve 3.

One example of compound of cross-linkable polymeric material for the second sleeve 4 has the following recipe given in parts by weight:
- ethylene-propylene copolymer, for example that known with the name DUTRAL TER - O46 E3 of DUTRAL S.p.A. 100
- conductive carbon black, for example that known on the market with the name VULCAN P of CABOT S.p.A. 39
- superconductive carbon black, for example that known on the market with the name KETIEN EC of AKZO S.p.A. 13
- zinc oxide 5
- poly 1.2 dihydro 2.2.4 trimethylquinoline 1.5
- paraffinic plasticizer 18.6
- paraffin 4
- stearic acid 1
- triallyl cyanurate 1
- dicumyl peroxide 5

In the particular embodiment of figure 1 the second sleeve 4, obtained with the example of the just given cross-linked compound, has a thickness of 4 mm and the following mechanical characteristics:
- ultimate tensile strength 78 kg/mm²
- percentage ultimate tensile elongation 230%
- modulus E 0.5 kg/mm²
- residual deformation due to an imposed elongation of 50% according to UNI 7321-74 standards on a flat specimen at 100°C and for a time of 500 hours 13%
- resistivity of volume according to ASTM D257 standards 500 Ohm x cm

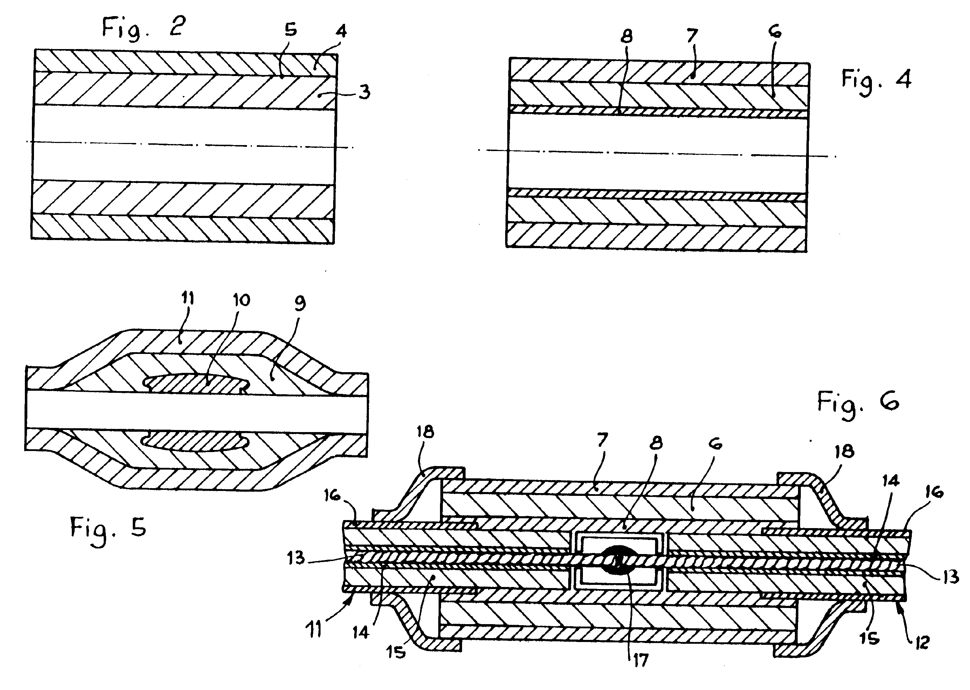

In the particular embodiment of an element for realizing joints of cables shown in figure 1 and the relative tubular covering shown also in figure 2, when said element is apt to realize joints between cables devoid of the outer screen, the first sleeve 3 is entirely made up of an electrically insulating polymeric material and the second sleeve 4 is made up of a compound of a polymeric material to which, no electrical or dielectric property is required even if this is not to be excluded. But what said must not be understood as a limitation for the scope of the present invention.

In fact, in the embodiment of figure 1, although the element is apt to realize joints between cables devoid of the outer screen, the second sleeve 4 has semiconductive properties being constituted by the previously disclosed cross-linked compound which is semiconductive.

Figure 4 shows in section an alternative embodiment of a tubular covering according to the invention for realizing joints of cables provided with an inner semiconductive layer and an outer semiconductive layer. Moreover, figure 3 shows an alternative embodiment of an element for realizing joints between cables according to the invention comprising the tubular covering for joints shown in figure 4.

As shown in figures 3 and 4 the tubular covering is formed by three coaxial and superimposed sleeves, joined to one another in correspondence of the surface where they are in mutual contact, for instance by extruding and cross-linking the three sleeves together when they are made up of compounds having chemically similar base polymers; alternatively, the three tubular sleeves are not mutually connected, i.e. they are independent of one another.

In particular the tubular covering of figures 3 and 4 is formed by a first sleeve 6 made up of a compound of an electrically insulating cross-linked polymeric material, for instance of the same compound, previously given, constituting the first sleeve 3 of the particular embodiment of figures 1 and 2.

Moreover the first sleeve 6 has in radial direction a thickness not smaller than that necessary from an electric point of view for carrying out joints in cables having a diameter of maximum value of the range of cables in which a joint according to the invention can be realized; for example in a set of cables whose outer diameter is comprised between 21 and 33 mm the thickness of the first sleeve 6 is of 8 mm.

In a position radially outside the first sleeve 6 there is a second sleeve 7 made up of a compound of a cross-linked polymeric material, for example of the compound previously given constituting the second sleeve 4 of the particular embodiment of figures 1 and 2.

Moreover in the particular case of the set of cables whose diameter is comprised in the previously given range the thickness of the second sleeve 7 is of 4 mm.

In a position radially inside the first sleeve 6 there is a third sleeve 8 (in the present specification called also stress grading sleeve) made up of a compound of cross-linked polymeric material whose characteristic is that of having a dielectric constant ε not lower than 10.

The thickness of the third sleeve 8 is that minimum indispensable to enable this latter to carry out the function entrusted to it in the set of cables to which it is destined; for instance in the set of cables whose diameter has been previously given, the thickness of the sleeve 8 is of 2 mm.

As regards the mechanical properties of the third sleeve 8, and in particular the modulus E and the percentage ultimate elongation, they are similar to those of the first sleeve 4.

An example of compound of a cross-linkable polymeric material suitable for constituting the third sleeve 8 has the following recipe given in parts by weight:
- ethylene-propylene copolymer, for instance that known on the market with the name DUTRAL CO-O54 of Dutral S.p.A. 100
- zinc oxide 5
- carbon black, for example that known on the market with the name HUBER N 990 of DEGUSSA S.p.A. 140
- paraffinic plasticizer 40
- poly 1.2 dihydro 2.2.4 trimethylquinoline 1.5
- stearic acid 1
- triallyl cyanurate 1
- dicumylperoxide 2

The characteristics of the above indicated compound constituting the third sleeve 8, after cross-linking are the following ones:
- ultimate tensile strength 70kg/mm²
- percentage ultimate tensile elongation 560%
- modulus E 0.15 kg/mm²
- residual deformation due to an imposed elongation of 50% according to UNI 7321-74 standards on a flat specimen at 100°C after a time of 500 hours 28%
- dielectric constant ε according to ASTM D150 standards 15
- resistivity of volume according to ASTM D257 standards 10¹⁰Ohm x cm

Figure 5 represents in section a further alternative embodiment of a tubular covering for connections between conductors in joints of cables according to the invention which when fitted on a rigid tubular support allows to carry out an alternative embodiment according to the invention of an element for realizing joints of electric cables.

As shown in figure 5, the tubular covering comprises a first sleeve 9, whose ends are tapered, made up of an electrically insulating material, constituted by a compound of a cross-linked polymeric material embedding a semiconductive tubular element 10 made up of a compound of a cross-linked polymeric material too.

In a position radially outside the first sleeve 9 there is a second semiconductive sleeve 11 which alone forms the ends of the tubular covering shown in figure 5.

The first sleeve 9 and the semiconductive element 10 comprised therein, have the same mechanical characteristics as the first sleeves 3 and 6 of the embodiments shown in figures 2 and 4 and previously disclosed.

Moreover the second sleeve 11, whose thickness is not smaller than 20% the maximum value of the thickness of the first sleeve 9, has the same mechanical properties of the second sleeves 4 and 7 of the embodiments shown in figures 2 and 4 and previously disclosed.

Examples of compounds for the first sleeve 9 and for the second sleeve 11 are respectively those previously given for the sleeves 3 and 4 of figures 1 and 2 ; an example of a compound for constituting the semiconductive element is that having the following recipe given in parts by weight:
- ethylene-propylene copolymer, for example that known on the market with the name DUTRAL TER O54 100
- zinc oxide 5
- conductive carbon black, for example that known on the market with the name VULKAN P of CABOT S.p.A. 80
- paraffinic plasticizer 35
- stearic acid 1
- poly 1.2 dihydro 2.2.4 trimethylquinoline 1.5
- triallyl cyanurate 2
- dicumyl peroxide 3.2

The characteristics of the above given compound constituting the semiconductive element 10, after cross-linking,are as follows:
- ultimate tensile strength 1.1 kg/mm²
- percentage ultimate tensile elongation 520%
- modulus E 0.15 kg/mm²
- residual deformation due to an imposed elongation of 50% according to the UNI 7321-74 standards on a flat specimen at 100°C after a time of 500 hours 28%
- resistivity of volume according to the ASTM D257 standards 500 Ohm x cm

Figure 6 shows a particular embodiment of a joint according to the invention connecting each other two extruded insulation cables 12, for instance having an outer diameter of 26 mm.

Each cable 12 has a conductor 13, for instance of aluminium, having a section of 150 mm². Around the conductor 13 there is a semiconductive layer 14 having a thickness for instance of 1.5 mm. On the layer 14 there is the insulation 15 of the cable, having a thickness of 5.5 mm, which is externally coated with a semiconductive layer 16, having a thickness of 1 mm.

At both ends of the cables 12 present in the joint, the conductors 13 and the insulations 15 of the cables themselves are gradually bared for a length.

Moreover the conductors 13 of the two cables 12 are arranged head to head and mutually connected for instance by means of a metallic clamp or a soldering 17.

On the zone where the two conductors 13 are connected there is preferably a metallic adaptor of cylindrical shape whose outer diameter is the same as the outer diameter of the cables so that the outer surface of said adaptor is aligned with the outer surface of the insulations of the cables.

A tubular covering is elastically tightened around the ends of the cables and the connection between the conductors of the cables, said tubular covering having the same structure and mechanical and electrical characteristics as those of the covering of the particular embodiment previously disclosed with reference to figure 4 and carried out with the element of figure 3. In fact, the tubular covering of the joint of figure 6 foresees by proceeding from inside towards outside a third stress grading sleeve 8, a first insulating sleeve 6 and a second semiconductive sleeve 7.

Moreover means are provided for carrying out the electrical connection between the outer semiconductive layer 16 of the cables and the second semiconductive sleeve 7; for example end caps 18 of semiconductive material.

In the joint according to the invention illustrated in figure 6 the third stress grading sleeve 8 embraces with its own ends both the outer semiconductive layers 16 of the two cables.

Alternative embodiments of joints of cables according to the invention not shown in the figures are those which can be obtained by fitting and tightening on the jointing zone of the conductors of the two cables and on the ends of these latter the tubular coverings of the embodiments previously disclosed with reference to figures 2 and 5.

The way for realizing the joints according to the present invention by means of the elements forming the object of the present invention too will not be described here since it is known per se.

From the description of the particular embodiment previously disclosed and from the following considerations, it is understood that by means of the present invention the aimed purposes are achieved.

The essential element of the present invention is the presence of a particular sleeve, in the present description called second sleeve, having the property of showing a residual deformation due to an imposed elastic elongation applied for a time not shorther than 2 years and at a temperature comprised between the ambient temperature and the cable service temperature smaller than that of any whatsoever other sleeve coupled to it in a radially innermost position and called in the present description first sleeve.

The second sleeve, unlike the first sleeve, thanks to the just stated property practically does not lose with the passing of time the ability of elastically shrinking.

Moreover the second sleeve being arranged in a radially outer position with respect to the first sleeve is able to oblige this latter to follow its own movements of elastic contraction.

Therefore the presence of the second sleeve having the above disclosed particular characteristic (and to which other characteristics, as for instance the semiconductivity, can be added) makes possible the formation of elements for realizing joints of cables wherein the same covering for connections between conductors can be elastically expanded on a tubular support of such an entity as to allow the execution of joints between cables chosen in a wide range of diameters and to store the element in question for a long time so as to avoid the need still existing of fitting the tubular covering on the tubular support only when a joint between cables must be carried out.

## Claims

1. Element of a device for realizing joints between electric cables said element comprising a rigid tubular support (1) and a tubular covering (2) for covering connections of conductors of electric cables, the tubular covering (2) comprising a first (3, 6) and a second (4, 7) sleeve, both sleeves being elastically expansible in radial direction, coaxial and superimposed each upon the other, made up of compounds of a cross-linked polymeric material fitted in a radially elastically expanded condition on said rigid tubular support (1), the first sleeve (3, 6) which is radially inside the second sleeve (4, 7) being electrically insulating at least for a part of its thickness, characterized by the fact that the cross-linked compound constituting the second sleeve (4, 7) has a residual deformation due to an imposed elongation applied in time smaller than that of the compound constituting the first sleeve (3, 6).

2. Element according to claim 1, characterized by the fact that the residual deformation due to an imposed elongation of the order of 50% and applied for a time of 500 hours at 100°C on the cross-linked compound constituting the second sleeve (4, 7) is smaller than 15%.

3. Element according to any one of claims 1 or 2, characterized by the fact that the second sleeve (4, 7) has in radial direction a thickness not smaller than 20% of the thickness in radial direction of the first sleeve (3, 6).

4. Element according to any one of the claims from 1 to 3, characterized by the fact that the first (3, 6) and the second (4, 7) sleeves are connected at the surfaces where they are in mutual contact.

5. Element according to claim 4, characterized by the fact that the mutual connection between the first (3, 6) and the second (4, 7) sleeve at the surfaces of mutual contact is realized by extruding and cross-linking the said sleeves together.

6. Element according to any one of the preceeding claims, characterized by the fact that the second sleeve (4, 7) is semiconductive.

7. Element according to claim 1, characterized by the fact that the cross-linked compound constituting the first sleeve (3, 6) has a modulus E not lower than 0.05 kg/mm² and a percentage ultimate elongation not lower than 250%.

8. Element according to claim 1, characterized by the fact that the cross-linked compound constituting the second sleeve (4, 7) has a modulus E not lower than twice the value of the modulus E of the cross-linked compound constituting the first sleeve (3, 6) and a percentage ultimate elongation not lower than 150%.

9. Element according to claims 1, 7 and 8, characterized by the fact that the modulus E of the cross-linked compound constituting the first sleeve (3, 6) is comprised between 0.05 and 0.5 kg/mm² and that the modulus of elasticity E of the cross-linked compound constituting the second sleeve (4, 7) is comprised between 0.1 and 1.5 kg/mm².

10. Element according to claim 1, characterized by the fact that the first sleeve (3, 6) is formed by at least two coextruded coaxial tubular layers made up of compounds of a cross-linked polymeric material, the compound of the radially innermost tubular layer having a not higher percentage ultimate tensile elongation and a lower modulus E than those of the radially outermost tubular layer.

11. Element according to claim 1, characterized by the fact of comprising a third stress grading sleeve (8) elastically expansible in radial direction which is fitted in a radially elastically expanded condition on the rigid tubular support (1) and is radially innermost with respect to the first sleeve (6) and is made up of a cross-linked compound having a dielectric constant not lower than 10.

12. Element according to claim 11, characterized by the fact that the third sleeve (8) is connected to the first sleeve (6) in correspondence of the surfaces where they are in mutual contact.

13. Element according to any one of the preceeding claims, characterized by the fact that all the sleeves (3, 4, 6, 7, 8) are made up of cross-linked compounds having base polymers with chemical affinity.

14. Joint for electric cables comprising an electrical and mechanical connection (17) between the conductors (13) of two cables (11, 12) and a covering for said connection comprising a first (3, 6) and a second (4, 7) sleeve, both sleeves being elastically expansible in radial direction, coaxial and superimposed each upon the other, made up of compounds of cross-linked polymeric material surrounding said connection (17) and are tightened on the end portions of the cables (11, 12) in a radially elastically expanded condition, the first sleeve (3, 6) which is radially inside the second sleeve (4, 7) being electrically insulating at least for a part of its thickness, characterized by the fact that the cross-linked compound constituting the second sleeve (4, 7) has a residual deformation, due to an imposed elongation applied in time, smaller than that of the compound constituting the first sleeve (3, 6).

15. Joint according to claim 14, characterized by the fact that the residual deformation due to an imposed elongation of the order of 50% applied for a time of 500 hours at 100°C on the cross-linked compound constituting the second sleeve (4, 7) is smaller than 15%.

16. Joint according to any one of the claims 14 and 15, characterized by the fact that the second sleeve (4, 7) has in radial direction a thickness not smaller than 20% of the thickness in radial direction of the first sleeve (3, 6).

17. Joint according to any one of the claims from 14 to 16, characterized by the fact that the first (3, 6) and the second (4, 7) sleeves are connected together in correspondence of the surfaces where they are in mutual contact.

18. Joint according to claim 17, characterized by the fact that the mutual connection between the first (3, 6) and the second (4, 7) sleeves in correspondence of the surfaces of mutual contact is carried out by extruding and cross-linking the said sleeves together.

19. Joint according to any one of the claims from 14 to 18, characterized by the fact that the second sleeve (4, 7) is semiconductive.

20. Joint according to claim 14, characterized by the fact that the cross-linked compound constituting the first sleeve (3, 6) has a modulus of elasticity E not lower than 0.05 kg/mm² and a percentage ultimate elongation not lower than 250%.

21. Joint according to claim 14, characterized by the fact that the cross-linked compound constituting the second sleeve (4, 7) has a modulus E not lower than twice the value of the modulus E of the cross-linked compound constituting the first sleeve (3, 6) and a percentage ultimate elongation not lower than 150%.

22. Joint according to claims 14, 20 and 21, characterized by the fact that the modulus E of the cross-linked compound constituting the first sleeve (3, 6) is comprised between 0.05 and 0.5 kg/mm² and that the modulus E of the cross-linked compound constituting the second sleeve (4, 7) is comprised between 0.1 and 1.5 kg/mm².

23. Joint according to claim 14, characterized by the fact that the first sleeve (3, 6) is formed by at least two coextruded coaxial tubular layers made up of compounds of cross-linked polymeric material, the compound of the radially innermost tubular layer having a not higher percentage ultimate tensile elongation and a lower modulus E than those of the radially outermost tubular layer.

24. Joint according to claim 14, characterized by the fact of comprising a third stress grading sleeve (8), elastically expansible in radial direction which is fitted in a radially elastically expanded condition on the rigid tubular support (1) and is radially innermost with respect to the first sleeve (3, 6) and made up of a cross-linked compound having a dielectric constant ε not lower than 10.

25. Joint according to claim 24, characterized by the fact that the third sleeve (8) is connected to the first sleeve (3, 6) in correspondence of the surfaces where they are in mutual contact.

26. Joint according to any one of the claims from 14 to 25, characterized by the fact that all the sleeves (3, 4, 6, 7, 8) are made up of cross-linked compounds having base polymers with chemical affinity.

27. Tubular covering for connections between conductors of electric cables (11, 12) comprising a first (3, 6) and a second (4, 7) sleeve, both sleeves being elastically expansible in radial direction, coaxial and superimposed each upon the other, made up of compounds of a cross-linked polymeric material, intended to surround the mechanical and electrical connection (17) between the conductors (13) of the cables (11, 12) and to tighten elastically on the end portions of the insulations (15) of the cables in radially elastically expanded conditions, the first sleeve (3, 6) which is radially inside the second sleeve (4, 7) being electrically insulating for at least a part of its thickness, characterized by the fact that the cross-linked compound constituting the second sleeve (4, 7) has a residual deformation due to an imposed elongation applied in time smaller than that of the compound constituting the first sleeve (3, 6).

28. Covering according to claim 27, characterized by the fact that the residual deformation due to an imposed elongation of the order of 50% and applied for a time of 500 hours at 100°C on the cross-linked compound constituting the second sleeve (4, 7) is smaller than 15%.

29. Covering according to any one of the claims 27 and 28, characterized by the fact that the second sleeve (4, 7) has in radial direction a thickness not smaller than 20% the thickness in radial direction of the first sleeve (3, 6).

30. Covering according to any one of the claims from 27 to 29, characterized by the fact that the first (3, 6) and the second (4, 7) sleeve are connected to each other in correspondence of the surfaces where they are in mutual contact.

31. Covering according to claim 30, characterized by the fact that the mutual connection between the first (3, 6) and the second (4, 7) sleeve in correspondence of the surfaces of mutual contact is carried out by extruding and cross-linking the said sleeves together.

32. Covering according to any one of the claims from 27 to 31, characterized by the fact that the second sleeve (4, 7) is semiconductive.

33. Covering according to claim 27, characterized by the fact that the cross-linked compound constituting the first sleeve (3, 6) has a modulus E not lower than 0.05 kg/mm² and a percentage ultimate elongation not lower than 250%.

34. Covering according to claim 27, characterized by the fact that the cross-linked compound constituting the second sleeve (4, 7) has a modulus of elasticity E not lower than twice the value of the modulus E of the cross-linked compound constituting the first sleeve (3, 6) and a percentage ultimate elongation not lower than 150%.

35. Covering according to claims 27, 33 and 34, characterized by the fact that the modulus E of the cross-linked compound constituting the first sleeve (3, 6) is comprised between 0.05 and 0.5 kg/mm² and that the modulus E of the cross-linked compound constituting the second sleeve (4, 7) is comprised between 0.1 and 1.5 kg/mm².

36. Covering according to claim 27, characterized by the fact that the first sleeve (3, 6) is formed by at least two coextruded coaxial tubular layers made up of compounds of cross-linked polymeric material, the compound of the radially innermost tubular layer having a not higher percentage ultimate tensile elongation and a lower modulus E than those of the radially outermost tubular layer.

37. Covering according to claim 27, characterized by the fact of comprising a third stress grading sleeve (8) elastically expansible in radial direction which can be fitted in radially elastically expanded conditions on the end portions of the insulations of the cables, is radially innermost with respect to the first sleeve (3, 6) and is made up of a cross-linked compound having a dielectric constant ε not lower than 10.

38. Covering according to claim 37, characterized by the fact that the third sleeve (8) is connected to the first sleeve (3, 6) at the surfaces where they are in mutual contact.

39. Covering according to any one of the claims from 27 to 38, characterized by the fact that all the sleeves (3, 4, 6, 7, 8) are made up of a cross-linked compound having base polymers with chemical affinity.

## Patentansprüche

1. Element einer Vorrichtung zur Herstellung von Verbindungen zwischen elektrischen Kabeln, wobei das Element eine starre rohrförmige Abstützung (1) und eine rohrförmige Abdeckung (2) zum Abdecken von Verbindungen von Leitern elektrischer Kabel aufweist, die rohrförmige Abdeckung (2) eine erste Hülse (3, 6) und eine zweite Hülse (4, 7) hat, beide Hülsen in Radialrichtung elastisch aufweitbar sind, koaxial und übereinander liegend angeordnet sind, aus Mischungen eines vernetzten polymeren Materials hergestellt sind und in einem radial elastisch aufgeweiteten Zustand auf die starre rohrförmige Abstützung (1) aufgepaßt sind, und die erste Hülse (3, 6), die radial innerhalb der zweiten Hülse (4,7) angeordnet ist, wenigstens auf einem Teil ihrer Dicke elektrisch isolierend ist, dadurch gekennzeichnet, daß die die zweite Hülse (4, 7) bildende vernetzte Mischung aufgrund einer über eine Zeit angelegten aufgebrachten Dehnung eine Restverformung hat, die kleiner ist als die der die erste Hülse (3, 6) bildenden Mischung.

2. Element nach Anspruch 1, dadurch gekennzeichnet, daß die Restverformung aufgrund einer aufgebrachten Dehnung einer Größenordnung von 50 %, die über eine Zeit von 500 h bei 100°C an der vernetzten Mischung, welche die zweite Hülse (4, 7) bildet, angelegt ist, kleiner als 15 % ist.

3. Element nach Anspruch 1 oder 2, dadurch gekennzeichnet, daß die zweite Hülse (4, 7) in Radialrichtung eine Dicke hat, die nicht kleiner als 20 % der Dicke in Radialrichtung der ersten Hülse (3, 6) ist.

4. Element nach einem der Ansprüche 1 bis 3, dadurch gekennzeichnet, daß die erste Hülse (3, 6) und die zweite Hülse (4, 7) an den Oberflächen verbunden sind, wo sie in gegenseitigem Kontakt stehen.

5. Element nach Anspruch 4, dadurch gekennzeichnet, daß die gegenseitige Verbindung zwischen der ersten Hülse (3, 6) und der zweiten Hülse (4, 7) an den Oberflächen mit gegenseitigem Kontakt durch gemeinsames Extrudieren und Vernetzen der Hülsen hergestellt ist.

6. Element nach einem der vorhergehenden Ansprüche, dadurch gekennzeichnet, daß die zweite Hülse (4, 7) halbleitend ist.

7. Element nach Anspruch 1, dadurch gekennzeichnet, daß die vernetzte Mischung, aus der die erste Hülse (3, 6) besteht, einen E-Modul von nicht weniger als 0,05 kg/mm² und eine Prozentbruchdehnung von nicht weniger als 250 % hat.

8. Element nach Anspruch 1, dadurch gekennzeichnet, daß die die zweite Hülse (4, 7) bildende vernetzte Mischung einen E-Modul von nicht weniger als dem doppelten Wert des E-Moduls der die erste Hülse (3, 6) bildenden vernetzten Mischung und eine Prozentbruchdehnung von nicht weniger als 150 % hat.

9. Element nach den Ansprüchen 1, 7 und 8, dadurch gekennzeichnet, daß der E-Modul der die erste Hülse (3, 6) bildenden vernetzten Mischung zwischen 0,05 und 0,5 kg/mm² liegt und der Elastizitätsmodul E der die zweite Hülse (4, 7) bildenden vernetzten Mischung zwischen 0,1 und 1,5 kg/mm² liegt.

10. Element nach Anspruch 1, dadurch gekennzeichnet, daß die erste Hülse (3, 6) von wenigstens zwei gemeinsam extrudierten koaxialen rohrförmigen Schichten gebildet wird, die aus Mischungen aus vernetztem polymeren Material hergestellt sind, wobei die Mischung der radial innersten rohrförmigen Schicht eine Prozentzerreißdehnung, die nicht höher ist als die der radial äußersten rohrförmigen Schicht, und einen E-Modul hat, der niedriger als der der radial äußersten rohrförmigen Schicht ist.

11. Element nach Anspruch 1, gekennzeichnet durch eine dritte, spannungsnivellierende Hülse (8), die in Radialrichtung elastisch aufweitbar ist, in radial elastisch aufgeweiteten Zustand auf die starre rohrförmige Abstützung (1) aufgepaßt ist, bezüglich der ersten Hülse (6) radial ganz innen liegt und aus einer vernetzten Mischung hergestellt ist, die eine Dielektrizitätskonstante von nicht weniger als 10 hat.

12. Element nach Anspruch 11, dadurch gekennzeichnet, daß die dritte Hülse (8) mit der ersten Hülse (6) in Korrespondenz der Oberflächen dort verbunden ist, wo sie in gegenseitigem Kontakt stehen.

13. Element nach einem der vorhergehenden Ansprüche, dadurch gekennzeichnet, daß alle Hülsen (3, 4, 6, 7, 8) aus vernetzten Mischungen hergestellt sind, die Basispolymere mit chemischer Affinität aufweisen.

14. Verbindung für elektrische Kabel mit einer elektrischen und mechanischen Verbindung (17) zwischen den Leitern (13) von zwei Kabeln (11, 12) und mit einer Abdeckung für die Verbindung, welche eine erste Hülse (3, 6) und eine zweite Hülse (4, 7) aufweist, wobei beide Hülsen in Radialrichtung elastisch aufweitbar sind, koaxial und übereinander liegend angeordnet sind, aus Mischungen von vernetztem polymeren Material hergestellt sind, die Verbindung (17) umgeben und an den Endabschnitten der Kabel (11, 12) in einem radial elastisch aufgeweiteten Zustand festgelegt sind und die radial innerhalb der zweiten Hülse (4, 7) liegende erste Hülse (3, 6) auf wenigstens einem Teil ihrer Dicke elektrisch isolierend ist, dadurch gekennzeichnet, daß die die zweite Hülse (4, 7) bildende vernetzte Mischung aufgrund einer über eine Zeit angelegten aufgebrachten Dehnung eine Restverformung hat, die kleiner ist als die der die erste Hülse (3, 6) bildenden Mischung.

15. Verbindung nach Anspruch 14, dadurch gekennzeichnet, daß die Restverformung aufgrund einer an der die zweiten Hülse (4, 7) bildenden vernetzten Mischung angelegten Dehnung in der Größenordnung von 50 %, die für eine Zeit von 500 h bei 100°C aufgebracht wird, kleiner als 15 % ist.

16. Verbindung nach Anspruch 14 oder 15, dadurch gekennzeichnet, daß die zweite Hülse (4, 7) in Radialrichtung eine Dicke hat, die nicht kleiner als 20 % der Dicke in Radialrichtung der ersten Hülse (3, 6) ist.

17. Verbindung nach einem der Ansprüche 14 bis 16, dadurch gekennzeichnet, daß die erste Hülse (3, 6) und die zweite Hülse (4, 7) in Korrespondenz der Oberflächen dort zusammen verbunden sind, wo sie in gegenseitigem Kontakt stehen.

18. Verbindung nach Anspruch 17, dadurch gekennzeichnet, daß die gegenseitige Verbindung zwischen der ersten Hülse (3, 6) und der zweiten Hülse (4, 7) in Korrespondenz der Oberflächen mit gegenseitigem Kontakt durch gemeinsames Extrudieren und Vernetzen der Hülsen durchgeführt wird.

19. Verbindung nach einem der Ansprüche 14 bis 18, dadurch gekennzeichnet, daß die zweite Hülse (4, 7) halbleitend ist.

20. Verbindung nach Anspruch 14, dadurch gekennzeichnet, daß die die erste Hülse (3, 6) bildende vernetzte Mischung einen Elastizitätsmodul E hat, der nicht kleiner als 0,05 kg/mm² ist, und eine Prozentbruchdehnung von nicht weniger als 250 % aufweist.

21. Verbindung nach Anspruch 14, dadurch gekennzeichnet, daß die die zweite Hülse (4, 7) bildende vernetzte Mischung einen E-Modul hat, der nicht kleiner als der doppelte Wert des E-Moduls der die erste Hülse (3, 6) bildenden Mischung ist und eine Prozentbruchdehnung von nicht weniger als 150 % aufweist.

22. Verbindung nach Anspruch 14, 20 und 21, dadurch gekennzeichnet, daß der E-Modul der die erste Hülse (3, 6) bildenden vernetzten Mischung zwischen 0,05 und 0,5 kg/mm² liegt und daß der E-Modul der die zweite Hülse (4, 7) bildenden vernetzten Mischung zwischen 0,1 und 1,5 kg/mm² liegt.

23. Verbindung nach Anspruch 14, dadurch gekennzeichnet, daß die erste Hülse (3, 6) aus wenigstens zwei zusammen extrudierten koaxialen rohrförmigen Schichten gebildet wird, die aus Mischungen aus vernetztem polymeren Material hergestellt sind, wobei die Mischung der radial innersten rohrförmigen Schicht eine Prozentzerreißdehnung hat, die nicht höher ist als die der radial äußersten rohrförmigen Schicht, und einen E-Modul aufweist, der kleiner als der der radial äußersten rohrförmigen Schicht ist.

24. Verbindung nach Anspruch 14, gekennzeichnet durch eine dritte spannungsnivellierende Hülse (8), die in Radialrichtung elastisch aufweitbar ist, in radial elastisch aufgeweitetem Zustand auf die starre rohrförmige Abstützung (1) aufgepaßt ist, bezüglich der ersten Hülse (3, 6) ganz innen liegt und aus einer vernetzten Mischung hergestellt ist, die eine Dielektrizitätskonstante E von nicht weniger als 10 hat.

25. Verbindung nach Anspruch 24, dadurch gekennzeichnet, daß die dritte Hülse (8) mit der ersten Hülse (3, 6) in Korrespondenz der Oberflächen dort verbunden ist, wo sie in gegenseitigem Kontakt stehen.

26. Verbindung nach einem der Ansprüche 14 bis 25, dadurch gekennzeichnet, daß alle Hülsen (3, 4, 6, 7, 8) aus vernetzten Mischungen hergestellt sind, die Basispolymere mit chemischer Affinität aufweisen.

27. Rohrförmige Abdeckung für Verbindungen zwischen Leitern elektrischer Kabel (11, 12) mit einer ersten Hülse (3, 6) und einer zweiten Hülse (4, 7), wobei beide Hülsen in Radialrichtung elastisch aufweitbar sind, koaxial und übereinander liegend angeordnet sind, aus Mischungen aus einem vernetzten polymeren Material hergestellt sind, für das Umschließen der mechanischen und elektrischen Verbindung (17) zwischen den Leitern (13) der Kabel (11, 12) und das elastische Festlegen an den Endabschnitten der Isolierungen (15) der Kabel in radial elastisch aufgeweiteten Zuständen vorgesehen sind, die erste Hülse (3, 6), die sich radial innerhalb der zweiten Hülse (4, 7) befindet, auf wenigstens einem Teil ihrer Dicke elektrisch isolierend ist, dadurch gekennzeichnet, daß die die zweite Hülse (4, 7) bildende vernetzte Mischung aufgrund einer über eine Zeit aufgebrachten angelegten Dehnung eine Restverformung hat, die kleiner ist als die der die erste Hülse (3, 6) bildenden Mischung.

28. Abdeckung nach Anspruch 27, dadurch gekennzeichnet, daß die Restverformung aufgrund einer angelegten Dehnung in der Größenordnung von 50 %, die über eine Zeit von 500 h bei 100°C auf die die zweite Hülse (4, 7) bildende vernetzte Mischung aufgebracht ist, kleiner als 15 % ist.

29. Abdeckung nach Anspruch 27 oder 28, dadurch gekennzeichnet, daß die zweite Hülse (4, 7) in Radialrichtung eine Dicke hat, die nicht kleiner als 20 % der Dicke in Radialrichtung der ersten Hülse (3, 6) ist.

30. Abdeckung nach einem der Ansprüche 27 bis 29, dadurch gekennzeichnet, daß die erste Hülse (3, 6) und die zweite Hülse (4, 7) miteinander in Korrespondenz der Oberflächen dort verbunden sind, wo sie in gegenseitigem Kontakt stehen.

31. Abdeckung nach Anspruch 30, dadurch gekennzeichnet, daß die gegenseitige Verbindung zwischen der ersten Hülse (3, 6) und der zweiten Hülse (4, 7) in Korrespondenz der Oberflächen mit gegenseitigem Kontakt durch gemeinsames Extrudieren und Vernetzen der Hülsen ausgeführt wird.

32. Abdeckung nach einem der Ansprüche 27 bis 31, dadurch gekennzeichnet, daß die zweite Hülse (4, 7) halbleitend ist.

33. Abdeckung nach Anspruch 27, dadurch gekennzeichnet, daß die die erste Hülse (3, 6) bildende vernetzte Mischung einen E-Modul hat, der nicht kleiner ist als 0,05 kg/mm² und eine Prozentbruchdehnung aufweist, die nicht kleiner als 250 % ist.

34. Abdeckung nach Anspruch 27, dadurch gekennzeichnet, daß die die zweite Hülse (4, 7) bildende vernetzte Mischung einen Elastizitätsmodul E hat, der nicht kleiner als der doppelte Wert des E-Moduls der die erste Hülse (3, 6) bildenden vernetzten Mischung ist und eine Prozentbruchdehnung von nicht weniger als 150 % hat.

35. Abdeckung nach den Ansprüchen 27, 33 und 34, dadurch gekennzeichnet, daß der E-Modul der die erste Hülse (3, 6) bildenden vernetzten Mischung zwischen 0,05 und 0,5 kg/mm² liegt und daß der E-Modul der die zweite Hülse (4, 7) bildenden vernetzten Mischung zwischen 0,1 und 1,5 kg/mm² liegt.

36. Abdeckung nach Anspruch 27, dadurch gekennzeichnet, daß die erste Hülse (3, 6) von wenigstens zwei zusammen extrudierten koaxialen rohrförmigen Schichten gebildet wird, die aus Mischungen aus vernetztem polymeren Material hergestellt sind, wobei die Mischung der radial innersten rohrförmigen Schicht eine Prozentzerreißdehnung hat, die nicht höher ist als die der radial äußersten rohrförmigen Schicht, und einen E-Modul hat, der kleiner ist als der der radial äußersten rohrförmigen Schicht.

37. Abdeckung nach Anspruch 27, gekennzeichnet durch eine dritte spannungsnivellierende Hülse (8), die in Radialrichtung elastisch aufweitbar ist, im radial elastisch aufgeweiteten Zustand auf den Endabschnitten der Isolierungen der Kabel aufpaßbar ist, bezüglich der ersten Hülse (3, 6) radial ganz innen liegt und aus einer vernetzten Mischung hergestellt ist, die eine Dielektrizitätskonstante ε von nicht weniger als 10 hat.

38. Abdeckung nach Anspruch 37, dadurch gekennzeichnet, daß die dritte Hülse (8) mit der ersten Hülse (3, 6) an den Oberflächen verbunden ist, wo sie in gegenseitigem Kontakt stehen.

39. Abdeckung nach einem der Ansprüche 27 bis 38, dadurch gekennzeichnet, daß alle Hülsen (3, 4, 6, 7, 8) aus einer vernetzten Mischung hergestellt sind, die Basispolymere mit chemischer Affinität hat.

## Revendications

1. Elément d'un dispositif de réalisation de jonctions entre des câbles électriques, ledit élément comprenant un support rigide tubulaire (1) et un recouvrement tubulaire (2) pour couvrir des connexions de conducteurs de câbles électriques, le recouvrement tubulaire comprenant un premier (3, 6) et un deuxième (4, 7) manchons, les deux manchons étant expansibles élastiquement en direction radiale, coaxiaux et superposés l'un à l'autre, constitués de composés d'une matière polymère réticulée placée dans une condition d'expansion élastique radiale sur ledit support tubulaire (1), le premier manchon (3, 6) qui est radialement à l'intérieur du deuxième manchon (4, 7) étant électriquement isolant au moins sur une partie de son épaisseur, caractérisé en ce que le composé réticulé qui constitue le deuxième manchon (4, 7) présente une déformation résiduelle due à un allongement imposé, appliqué pendant un temps donné, inférieur à celui du composé constituant le premier manchon (3, 6).

2. Elément selon la revendication 1, caractérisé en ce que la déformation résiduelle, due à un allongement imposé de l'ordre de 50% et appliqué pendant un temps de 500 heures à 100°C sur le composé réticulé constituant le deuxième manchon (4, 7), est inférieure à 15%.

3. Elément selon l'une quelconque des revendications 1 ou 2, caractérisé en ce que l'épaisseur du deuxième manchon (4, 7) en direction radiale n'est pas inférieure à 20% de l'épaisseur du premier manchon (3, 6) en direction radiale.

4. Elément selon l'une quelconque des revendications 1 à 3, caractérisé en ce que le premier (3, 6) et le deuxième (4, 7) manchons sont reliés aux surfaces où ils sont en contact mutuel.

5. Elément selon la revendication 4, caractérisé en ce que la liaison mutuelle entre le premier (3, 6) et le deuxième (4, 7) manchons aux surfaces de contact mutuel est réalisée en extrudant et en réticulant ensemble lesdits manchons.

6. Elément selon l'une quelconque des revendications précédentes, caractérisé en ce que le deuxième manchon (4, 7) est semi-conducteur.

7. Elément selon la revendication 1, caractérisé en ce que le module E du composé réticulé qui constitue le premier manchon (3, 6) n'est pas inférieur à 0,05 kg/mm² et que son allongement à la rupture n'est pas, en pourcentage, inférieur à 250%.

8. Elément selon la revendication 1, caractérisé en ce que le module E du composé réticulé constituant le deuxième manchon (4, 7) n'est pas inférieur au double de la valeur du module E du composé réticulé qui constitue le premier manchon,(3, 6) et en ce que son allongement à la rupture n'est pas, en pourcentage, inférieur à 150%.

9. Elément selon les revendications 1, 7 et 8, caractérisé en ce que le module E du composé réticulé qui constitue le premier manchon (3, 6) est compris entre 0,05 et 0,5 kg/mm² et que le module d'élasticité E du composé réticulé constituant le deuxième manchon (4, 7) est compris entre 0,1 et 1,5 kg/mm².

10. Elément selon la revendication 1, caractérisé en ce que le premier manchon (3, 6) est formé d'au moins deux couches tubulaires coaxiales coextrudées constituées de composés d'une matière polymère réticulée, l'allongement à la rupture du composé de la couche tubulaire radialement intérieure et son module E n'étant pas inférieurs à ceux de la couche tubulaire radialement extérieure.

11. Elément selon la revendication 1, caractérisé en ce qu'il comprend un troisième manchon (8) de gradation des contraintes, expansible élastiquement en direction radiale, qui est monté dans une condition d'expansion élastique radiale sur le support rigide tubulaire (1), et est situé radialement à l'intérieur par rapport au premier manchon (6) et constitué d'un composé réticulé dont la constante diélectrique n'est pas inférieure à 10.

12. Elément selon la revendication 11, caractérisé en ce que le troisième manchon (8) est relié au premier manchon (6) en correspondance des surfaces où ils sont en contact mutuel.

13. Elément selon l'une quelconque des revendications précédentes, caractérisé en ce que tous les manchons (3, 4, 6, 7, 8) sont en composés réticulés incluant des polymères de base présentent une affinité chimique.

14. Jonction de câbles électriques comprenant une liaison électrique et mécanique (17) entre les conducteurs (13) des deux câbles (11, 12) et un recouvrement de ladite liaison comprenant un premier (3, 6) et un deuxième (4, 7) manchons, les deux manchons étant expansibles élastiquement en direction radiale, coaxiaux et superposés l'un au-dessus de l'autre, constitués de composés d'une matière polymère réticulée entourant ladite liaison (17) et étant serrés sur les parties d'extrémités des câbles (11, 12) dans une condition d'expansion élastique radiale, le premier manchon (3, 6) qui est radialement à l'intérieur du deuxième manchon (4, 7) étant électriquement isolant au moins sur une partie de son épaisseur, caractérisé en ce que le composé réticulé qui constitue le deuxième manchon (4, 7) présente une déformation résiduelle due à un allongement imposé, appliqué pendant un temps donné, inférieur à celui du composé constituant le premier manchon (3, 6).

15. Joint selon la revendication 14, caractérisé en ce que la déformation résiduelle, due à un allongement imposé de l'ordre de 50% et appliqué pendant un temps de 500 heures à 100 C sur le composé réticulé constituant le deuxième manchon (4, 7), est inférieure à 15%.

16. Joint selon l'une quelconque des revendications 14 ou 15, caractérisé en ce que l'épaisseur du deuxième manchon (4, 7) en direction radiale n'est pas inférieure à 20% de l'épaisseur du premier manchon (3, 6) en direction radiale.

17. Joint selon l'une quelconque des revendications 14 à 16, caractérisé en ce que le premier (3, 6) et le deuxième (4, 7) manchons sont reliés aux surfaces où ils sont en contact mutuel.

18. Joint selon la revendication 17, caractérisé en ce que la liaison mutuelle entre le premier (3, 6) et le deuxième (4, 7) manchons en correspondance des surfaces de contact mutuel est effectuée en extrudant et en réticulant ensemble lesdits manchons.

19. Joint selon l'une quelconque des revendications 14 à 18, caractérisé en ce que le deuxième manchon (4, 7) est semi-conducteur.

20. Joint selon la revendication 14, caractérisé en ce que le module E du composé réticulé qui constitue le premier manchon (3, 6) n'est pas inférieur à 0,05 kg/mm² et que son allongement à la rupture n'est pas, en pourcentage, inférieur à 250%.

21. Joint selon la revendication 14, caractérisé en ce que le module E du composé réticulé constituant le deuxième manchon (4, 7) n'est pas inférieur au double de la valeur du module E du composé réticulé qui constitue le premier manchon,(3, 6) et en ce que son allongement à la rupture n'est pas, en pourcentage, inférieur à 150%.

22. Joint selon les revendications 14, 20 et 21, caractérisé en ce que le module E du composé réticulé qui constitue le premier manchon (3, 6) est compris entre 0,05 et 0,5 kg/mm² et que le module d'élasticité E du composé réticulé constituant le deuxième manchon (4, 7) est compris entre 0,1 et 1,5 kg/mm².

23. Joint selon la revendication 14, caractérisé en ce que le premier manchon (3, 6) est formé d'au moins deux couches tubulaires coaxiales coextrudées constituées de composés d'une matière polymère réticulée, l'allongement à la rupture du composé de la couche tubulaire radialement intérieure et son module E n'étant pas inférieurs à ceux de la couche tubulaire radialement extérieure.

24. Joint selon la revendication 14, caractérisé en ce qu'il comprend un troisième manchon (8) de gradation des contraintes, expansible élastiquement en direction radiale, qui est monté dans une condition d'expansion élastique radiale sur le support rigide tubulaire (1), et est situé radialement à l'intérieur par rapport au premier manchon (3, 6) et constitué d'un composé réticulé dont la constante diélectrique ε n'est pas inférieure à 10.

25. Joint selon la revendication 24, caractérisé en ce que le troisième manchon (8) est relié au premier manchon (3, 6) en correspondance des surfaces où ils sont en contact mutuel.

26. Joint selon l'une quelconque des revendications 14 à 25, caractérisé en ce que tous les manchons (3, 4, 6, 7, 8) sont en composés réticulés incluant des polymères de base présentent une affinité chimique.

27. Recouvrement tubulaire destiné à des liaisons entre conducteurs de câbles électriques (11, 12) comprenant un premier (3, 6) et un deuxième (4, 7) manchons, les deux manchons étant expansibles élastiquement en direction radiale, coaxiaux et superposés l'un à l'autre, constitués de composés d'une matière polymère réticulée prévue pour entourer ladite liaison mécanique et électrique (17) entre les conducteurs (13) des câbles (11, 12) et pour serrer élastiquement les parties d'extrémités des isolants (15) des câbles dans des conditions d'expansion élastique radiale, le premier manchon (3, 6) qui est radialement à l'intérieur du deuxième manchon (4, 7) étant électriquement isolant au moins sur une partie de son épaisseur, caractérisé en ce que le composé réticulé qui constitue le deuxième manchon (4, 7) présente une déformation résiduelle due à un allongement imposé, appliqué pendant un temps donné, inférieur à celui du composé constituant le premier manchon (3, 6).

28. Recouvrement selon la revendication 27, caractérisé en ce que la déformation résiduelle, due à un allongement imposé de l'ordre de 50% et appliqué pendant un temps de 500 heures à 100 °C sur le composé réticulé constituant le deuxième manchon (4, 7), est inférieure à 15%.

29. Recouvrement selon l'une quelconque des revendications 27 ou 28, caractérisé en ce que l'épaisseur du deuxième manchon (4, 7) en direction radiale n'est pas inférieure à 20% de l'épaisseur du premier manchon (3, 6) en direction radiale.

30. Recouvrement selon l'une quelconque des revendications 27 à 29, caractérisé en ce que le premier (3, 6) et le deuxième (4, 7) manchons sont reliés aux surfaces où ils sont en contact mutuel.

31. Recouvrement selon la revendication 30, caractérisé en ce que la liaison mutuelle entre le premier (3, 6) et le deuxième (4, 7) manchons aux surfaces de contact mutuel est réalisée en extrudant et en réticulant ensemble lesdits manchons.

32. Recouvrement selon l'une quelconque des revendications 27 à 31, caractérisé en ce que le deuxième manchon (4, 7) est semi-conducteur.

33. Recouvrement selon la revendication 27, caractérisé en ce que le module E du composé réticulé qui constitue le premier manchon (3, 6) n'est pas inférieur à 0,05 kg/mm² et que son allongement à la rupture n'est pas, en pourcentage, inférieur à 250%.

34. Recouvrement selon la revendication 27, caractérisé en ce que le module E du composé réticulé constituant le deuxième manchon (4, 7) n'est pas inférieur au double de la valeur du module E du composé réticulé qui constitue le premier manchon,(3, 6) et en ce que son allongement à la rupture n'est pas, en pourcentage, inférieur à 150%.

35. Recouvrement selon les revendications 27, 33, et 34, caractérisé en ce que le module E du composé réticulé qui constitue le premier manchon (3, 6) est compris entre 0,05 et 0,5 kg/mm² et que le module d'élasticité E du composé réticulé constituant le deuxième manchon (4, 7) est compris entre 0,1 et 1,5 kg/mm².

36. Recouvrement selon la revendication 27, caractérisé en ce que le premier manchon (3, 6) est formé d'au moins deux couches tubulaires coaxiales coextrudées constituées de composés d'une matière polymère réticulée, l'allongement à la rupture du composé de la couche tubulaire radialement intérieure et son module E n'étant pas inférieurs à ceux de la couche tubulaire radialement extérieure.

37. Recouvrement selon la revendication 27, caractérisé en ce qu'il comprend un troisième manchon (8) de gradation des contraintes, expansible élastiquement en direction radiale, qui est monté dans une condition d'expansion élastique radiale sur le support rigide tubulaire (1), et est situé radialement à l'intérieur par rapport au premier manchon (3, 6) et constitué d'un composé réticulé dont la constante diélectrique ε n'est pas inférieure à 10.

38. Recouvrement selon la revendication 37, caractérisé en ce que le troisième manchon (8) est relié au premier manchon (3, 6) en correspondance des surfaces où ils sont en contact mutuel.

39. Recouvrement selon l'une quelconque des revendications 27 à 38, caractérisé en ce que tous les manchons (3, 4, 6, 7, 8) sont en composés réticulés incluant des polymères de base présentent une affinité chimique.
